# EUROPEAN PATENT APPLICATION

(11) **EP 4 224 023 A1**
(43) Date of publication of application: **09.08.2023**
(21) Application number: 23153784.6
(22) Date of filing: 27.01.2023
(51) Int. Cl.: F16B 12/50, A47B 13/00

(54) **DEVICE FOR CONNECTING CROSSMEMBERS TO A LEG OF A TABLE OR DESK**

(30) Priority: 03.02.2022 IT 202200001856
(71) Applicant: Quadrifoglio Sistemi D'Arreddo S.p.A., 31040 Mansue', Frazione Basalghelle TV (IT)
(72) Inventor: CIGANA, Roberto, 33087 PASIANO DI PORDENONE PN (IT)
(74) Representative: Modiano, Micaela Nadia

(57) **Abstract**

The present application relates to a device (1) for connecting the terminal ends (2a, 2b) of two crossmembers (3a, 3b) to first lateral surfaces (4a, 4b) of a leg (5) of a table or desk (6).

The terminal ends (2a, 2b) of the crossmembers (3a, 3b) have a maximum width (b) that has the same dimensions as the resting side (a) of the leg (5).

There is a triangular joint (7) with a base (8) proximate to the ends (9a, 9b) of which protrude, from each side and at right angles to the base (8), a pair of protrusions (11a, 11b) which can be positioned inside first seats (12a, 12b) which are provided on the crossmembers (3a, 3b).

The joint (7) has a vertex composed of a block (14), which is solid and perpendicular to the base (8), is axially perforated and with the terminal end shaped complementarily to the corner (21) of the leg (5).

The block (14) defines a pair of side walls (15a, 15b), which pass within adapted second seats (16a, 16b) which are provided at the terminal ends (2a, 2b) of the crossmembers (3a, 3b).

A locking screw (17) is associable axially with the base (8) and with the block (14) and is provided with a first head (18) for resting against the base (8) and a first stem (19) which can be screwed into an adapted third, threaded seat (20) which is provided on a corner of the leg (5).

## Description

The present invention relates to a device for connecting crossmembers to a leg of a table or desk.

Nowadays it is known to make tables that comprise a frame, usually metallic, made up of crossmembers and four legs, on which a table top is arranged.

One technical problem that has received attention is that of interconnecting the crossmembers and the legs with each other.

Therefore Italian patent no. 102004901259717 is known, filed on 11/11/2004 with application no. UD2004A0212, which describes a device for connecting two tubular elements of a frame to a third tubular element, the device comprising a joint, provided with two side mutually converging faces, each face provided with at least one pin, which are adapted to be inserted into mating holes which are provided on a corresponding inner face of the two tubular elements and a connecting element for connection between said joint and said third tubular element.

In this solution specifies that the holes are of the circular type and can be made using simple manual methods.

One drawback that can be ascribed to this known art is that the joint has, at its vertex, an axially recessed seat that is shaped complementarily to the corner of the leg, which necessarily means that the side of the leg that interacts with the ends of the crossmembers has larger dimensions than the end of the crossmember that interacts with it.

It is therefore not possible to join crossmembers and legs that have the same cross-section, because the joint would not interact with the leg.

In the cited known art, furthermore, there is a fixing element which needs to be inserted into the leg and then allowed to fall inside it so that a lower part of it comes into contact with the connecting element.

Then it is necessary to withdraw the connecting element partially so that the fixing element descends further until an upper part of the fixing element comes into contact with the connecting element.

Operating in this way entails the drawback of having to perform, in sequence, several steps in order to try to obtain a correct positioning of the various components in order to be able to obtain the stable connection between those components.

Furthermore the joint rests directly, at the vertex, on the leg, which entails, during the step of tightening the screw, the possibility of exceeding the maximum tightness level during the assembly.

The aim of the present application is to resolve the above mentioned technical problems, eliminating the drawbacks in the cited known art, by providing an invention that makes it possible to connect, stably and easily, two crossmembers to a leg of a table or desk using crossmembers and a leg that have the same cross-section.

Within the above aim, another important object of the invention is to provide an invention that makes it possible to achieve, with a single operation, the rapid and optimal positioning between the various components to be connected together.

Another object is to provide an invention using a screw in which, during assembly, of the maximum tightness level of said screw cannot be exceeded.

Another object is to provide an invention that is structurally simple and low cost and can be made with the usual conventional systems.

This aim and these and other objects which will become better apparent hereinafter are achieved by a device 1 for connecting the terminal ends 2a, 2b of two crossmembers 3a, 3b tofirst lateral surfaces 4a, 4b of a leg 5 of a table or desk6, characterized in that said terminal ends 2a, 2b of said crossmembers 3a, 3b has a maximum width b that has the same dimensions as the resting side a of said leg 5, said device 1 having a triangular joint 7 with a base 8 proximate to the ends 9a, 9b of which protrude, from each side and at right angles to said base 8, two protrusions 11a, 11b which can be positioned inside first seats 12a, 12b provided on said crossmembers 3a, 3b, said joint 7 having a vertex composed of a block 14 which is solid and perpendicular to said base 8, is axially perforated and with the terminal end shaped complementarily to the corner 21 of said leg 5, said block 14 defining a pair of side walls 15a, 15b which pass within adapted second seats 16a, 16b which are provided at said terminal ends 2a, 2b of said crossmembers 3a, 3b, a locking screw 17 being associable axially with said base 8 and said block 14 and being provided with a first head 18 for resting on said base 8 and a first stem 19 which can be screwed into an adapted third, threaded seat 20 provided on a corner of said leg 5.

Further characteristics and advantages of the invention will become better apparent from the detailed description of a particular but not exclusive embodiment thereof, illustrated by way of non-limiting example in the accompanying drawings, wherein:
Figure 1 is a perspective view from above of a first table;

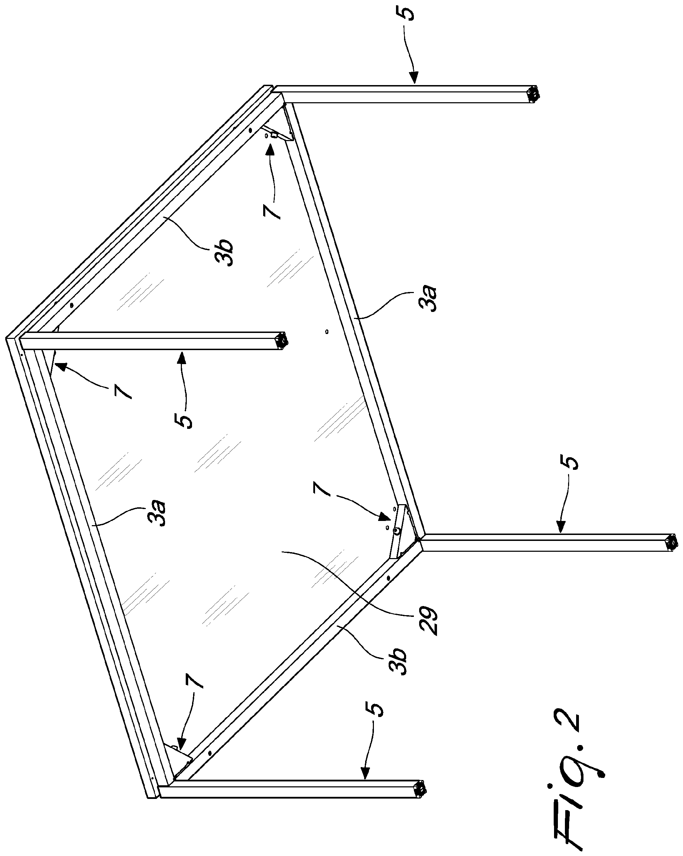

Figure 2 is a perspective view from below of the first table;
Figure 3 is a detail view from above of a corner of the first table;
Figure 4 is a detail view from below of a corner of the first table;
Figure 5 is a first perspective and exploded view of the components of the invention;

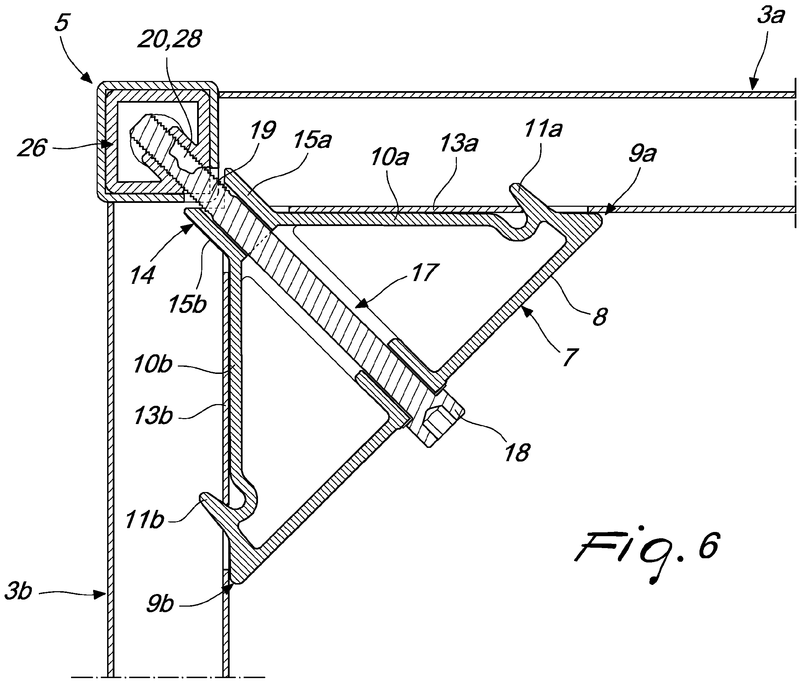

Figure 6 is a cross-sectional view taken transversely to the joint in the assembled condition;
Figure 7 is a perspective view from above of a second table;
Figure 8 is a perspective view from below of the second table;
Figure 9 is a detail view from above of a corner of the second table;
Figure 10 is a detail view from below of a corner of the second table;
Figure 11 is a detail view of a corner of the second table with the leg decoupled from the table top;
Figure 12 is a detail view from below of a corner of the second table;
Figures 13 and 14 are perspective and exploded views, respectively from below and from above, of the corner of the table.

In the example embodiments that follow, individual characteristics, given in relation to specific examples, may actually be interchanged with other, different characteristics that exist in other exemplary embodiments.

Moreover, it should be noted that anything found to be already known during the patenting process is understood not to be claimed and to be the subject of a disclaimer.

With reference to the figures, the reference numeral 1 generally designates a device for connecting the terminal ends 2a, 2b of two crossmembers 3a, 3b and to first lateral surfaces 4a, 4b of a leg 5 of a table or desk 6.

The terminal ends 2a, 2b of the crossmembers 3a, 3b have a maximum width b that has substantially the same dimensions as the resting side a of the leg 5.

The device 1 comprises a joint 7, triangular in plan view, which has a base 8 proximate to the ends 9a, 9b of which protrude, from each side 10a, 10b and at right angles to the base 8, a pair of protrusions 11a, 11b which can be positioned inside first seats 12a, 12b which are provided on the adjacent second lateral surfaces 13a, 13b of the crossmembers 3a, 3b.

The joint 7 has a vertex composed of a block 14, which is solid and perpendicular to the base 8, is axially perforated and with the terminal end shaped complementarily to the corner 21 of the leg 5.

The block 14 defines a pair of side walls 15a, 15b, which are identical and parallel to each other and are perpendicular to the base 8.

Each one of the pair of side walls 15a, 15 of the block 14 passes within adapted second seats 16a, 16b which are provided at the terminal ends 2a, 2b of the second lateral surfaces 13a, 13b of the crossmembers and are mutually spaced apart so as to be arranged, when installed, adjacent to the first lateral surfaces 4a, 4b of the leg 5.

The block 14 and the pair of side walls 15a, 15b have therefore a length that is such as not to interact, when installed, with the leg 5.

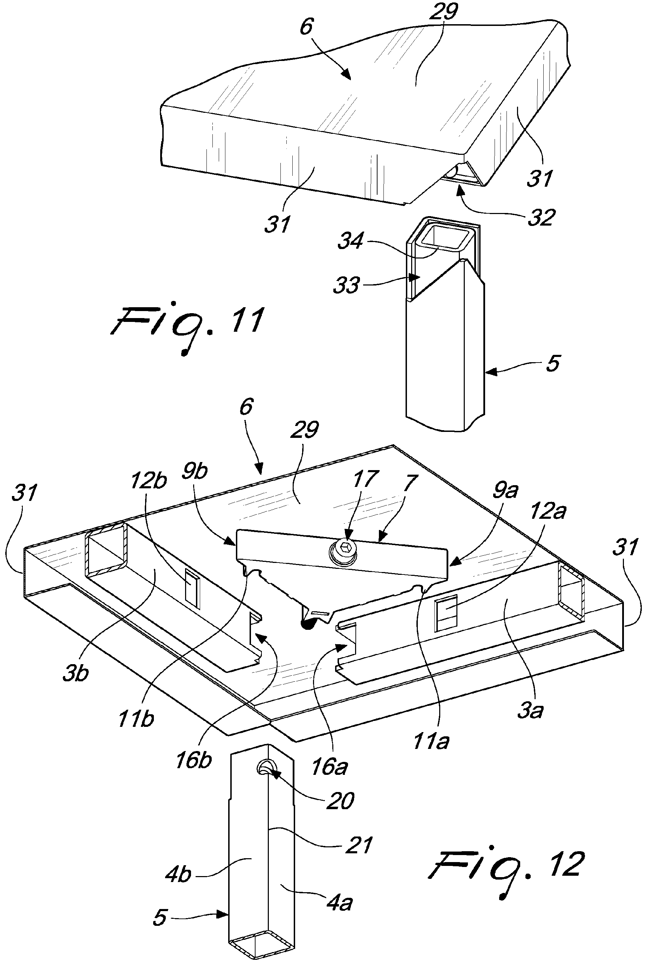

A locking screw 17 is associable axially with the base 8 and with the block 14 and is provided with a first head 18 for resting against the base 8 and a first stem 19 which can be screwed into an adapted third, threaded seat 20 which is provided on a corner 21 of the leg 5, as shown in Figure 12.

The first seats 12a, 12b and the pair of protrusions 11a, 11b as well as the third seat 20 are provided so that, once installed, the joint 7 is arranged with the ends of the pair of side walls 15a, 15b arranged adjacent to the corner 21 of the leg 5 and the protrusions 11a, 11b are arranged inside and in abutment against the first seats 12a, 12b provided on the second lateral surfaces 13a, 13b of the crossmembers 3a, 3b.

Alternatively, the leg 5 has, at the upper end 22, a fourth, axial seat 23 for a complementarily contoured T-shaped insert 24 which has a second head 25, which when installed rests on the upper end 22 of the leg 5, and a second stem 26.

The second stem 26 of the T-shaped insert 24 is provided, at one corner, with a threaded receptacle 27 which interacts with the first stem 19 of the screw 17.

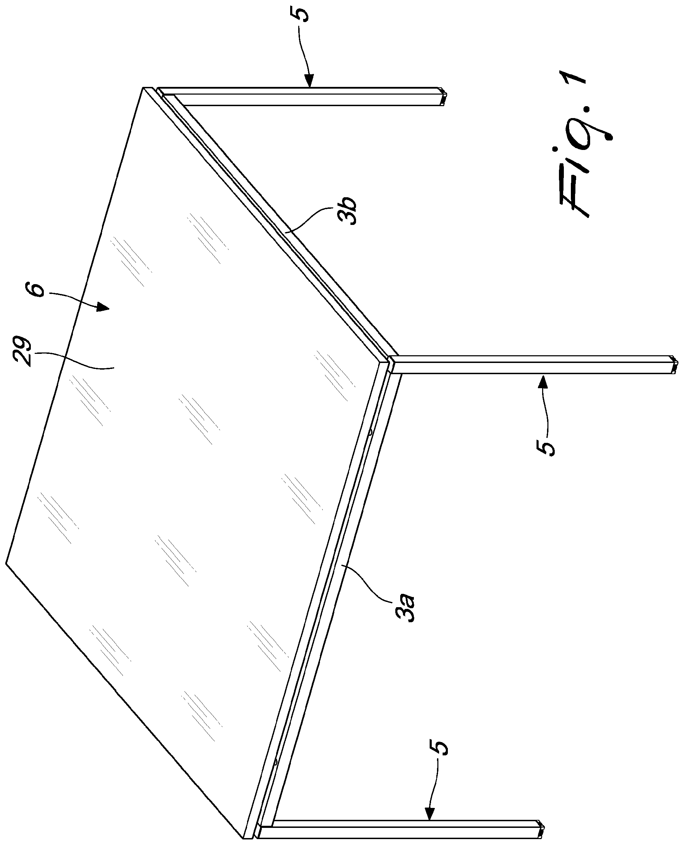

In this solution, shown in Figure 1, the third, threaded seat 20 which is provided on a corner 21 of the leg 5 is constituted by a simple hole 28.

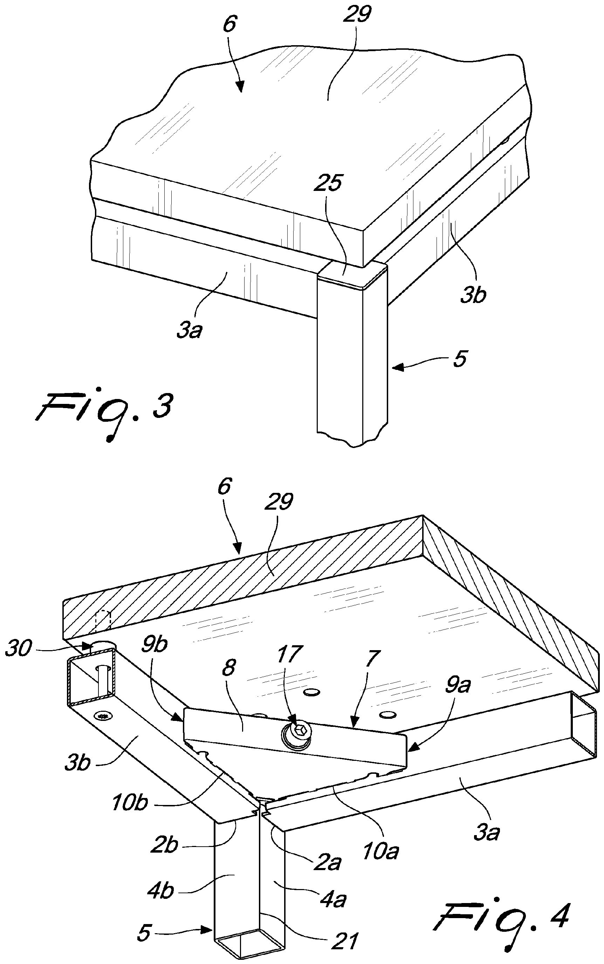

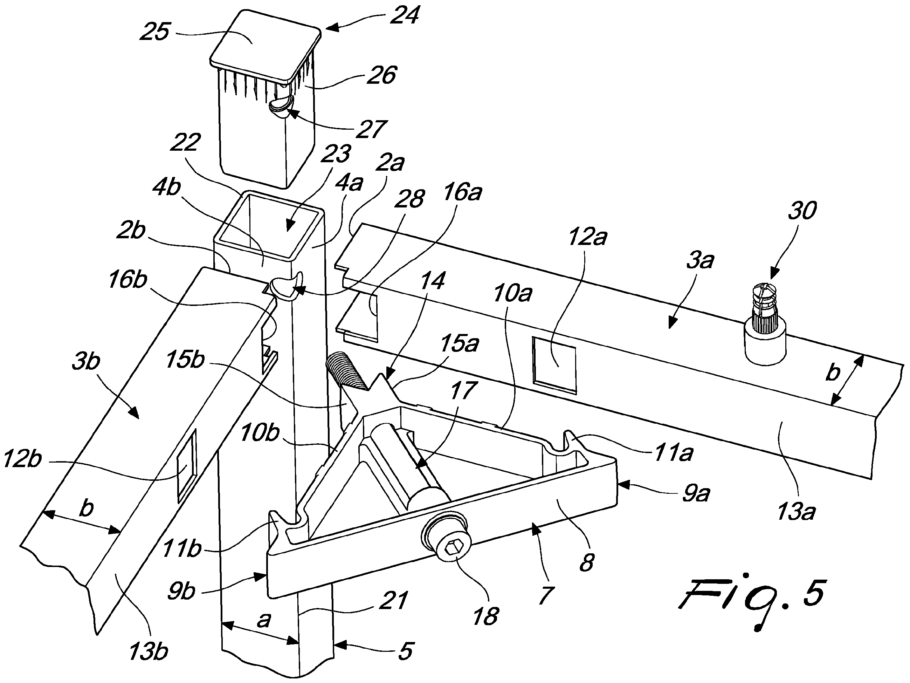

A table top 29 can be associated with the table or desk 6; it can be arranged on top of the crossmembers 3a, 3b, which have spacers 30 which can be accommodated partially inside adapted fourth seats or holes provided below the table top 29, as shown in Figures 3, 4 and 5.

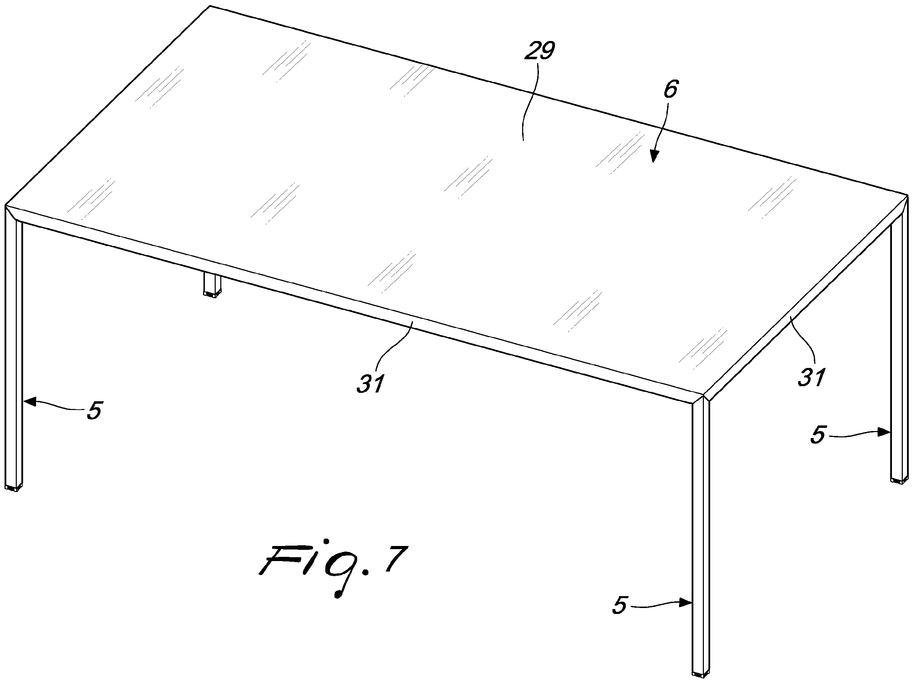

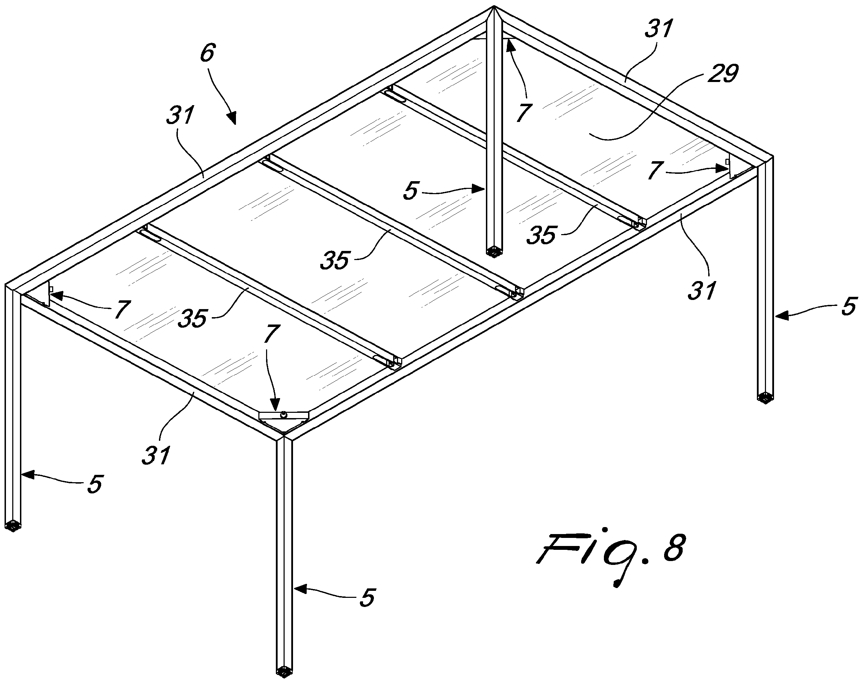

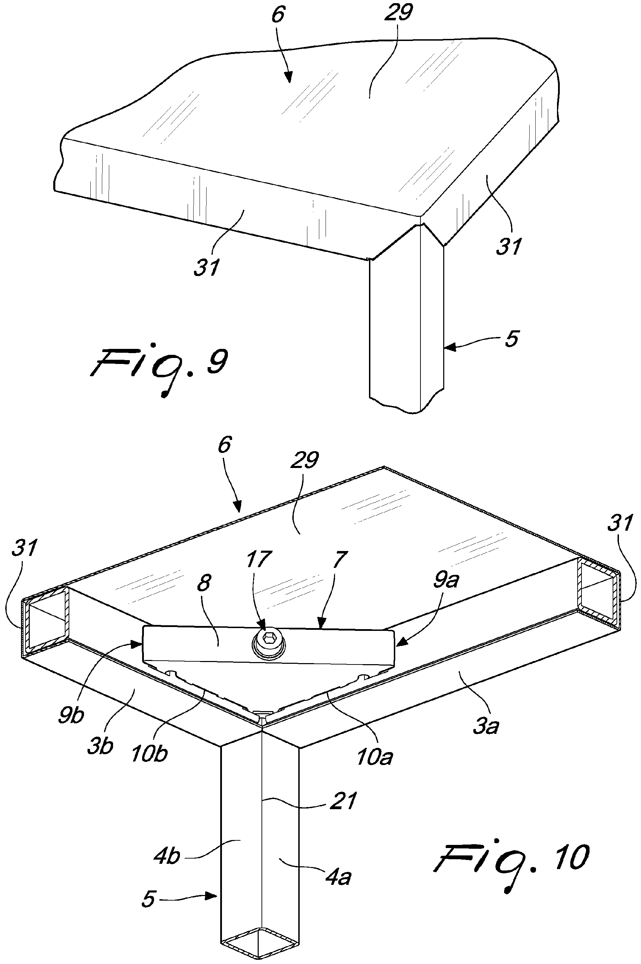

Alternatively, the table top 29 is of the box-like type, as shown in Figures 7, 8, 9 and 10 in which it has edges 31 folded onto the crossmembers 3a, 3b, recesses 32 being provided at the corners which are substantially triangular in shape and are shaped complementarily to adapted inserts 33 which are provided at the upper end 22 of each leg 5.

Said leg advantageously is provided with an axial reinforcement 34.

Adapted reinforcement bars 35 can be located below the table top 29.

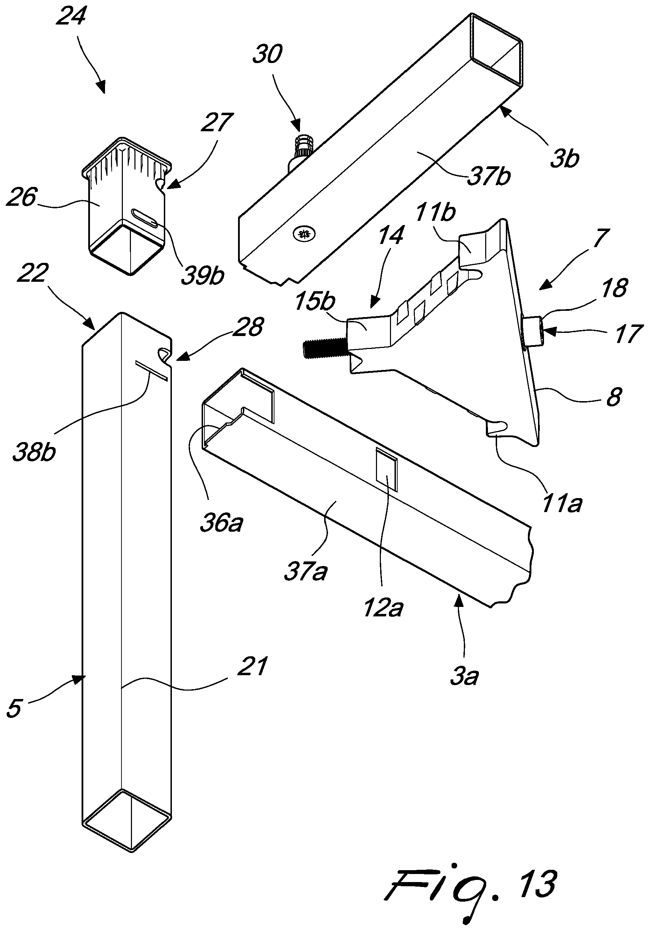

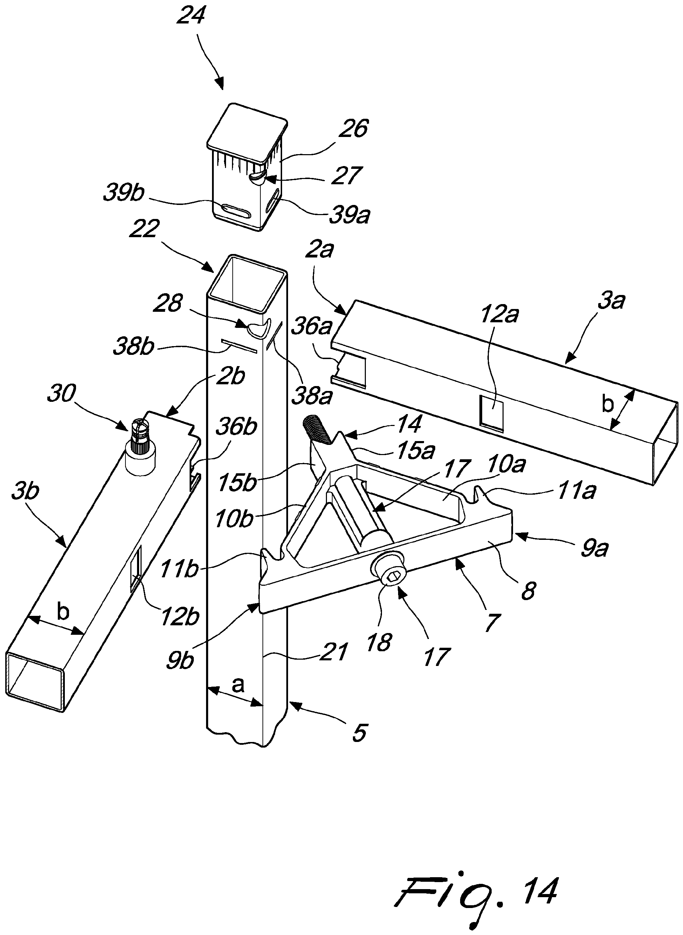

Figures 13 and 14 illustrate an embodiment in which, at the terminal ends 2a, 2b of the crossmembers 3a, 3b which interact with the leg 5, there is a raised portion 36a, 36b that protrudes axially from, and advantageously is offset from, the lower surface 37a, 37b of the crossmembers 3a, 3b.

Proximate to the upper end 22 of the leg 5, and in an area below the hole 28, there are fifth seats 38a, 38b which are shaped complementarily to the raised portions 36a, 36b.

The position of the fifth seats 38a, 38b is such that coupling the crossmembers 3a, 3b to the leg 5 also results in the insertion into said fifth seats of the raised portions 36a, 36b; in this manner the alignment of the crossmembers 3a, 3b is improved, thus preventing said crossmembers from sliding outward by pivoting on the protrusions 11a, 11b of the joint 7 and so preventing a bending inward of the crossmembers 3a, 3b.

Advantageously, proximate to the lower end of the second stem 26 of the insert 24 there are sixth seats 39a, 39b which are shaped complementarily to the fifth seats 38a, 38b for the insertion of the raised portions 36a, 36b.

Thus it has been found that the invention fully achieves the intended aim and objects, a device having being obtained that is adapted to allow the connection of the terminal ends of two crossmembers to a side of a leg of a table or desk which have a maximum width that has the same dimensions as the side for supporting the leg, which makes it possible to obtain, with a single operation, the rapid and optimal positioning between the various components to be connected together.

As the crossmembers 3a, 3b and the legs 5 have the same transverse cross-section, the shape structure of the joint 7 makes it possible to obtain an optimal compression zone between the terminal ends 2a, 2b of the crossmembers 3a, 3b and the first lateral surfaces 4a, 4b of each leg 5.

Furthermore, the stroke limit in abutment between the terminal ends 2a, 2b of the crossmembers 3a, 3b and the first lateral surfaces 4a, 4b of each leg 5 makes it possible to limit the maximum tightness level of the screw 17.

Naturally the materials used as well as the dimensions of the individual components of the device according to the invention may be more relevant according to specific requirements.

The characteristics indicated above as advantageous, convenient or the like, may also be missing or be substituted by equivalent characteristics.

The disclosures in Italian Patent Application No. 102022000001856 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for connecting the terminal ends (2a, 2b) of two crossmembers (3a, 3b) to first lateral surfaces (4a, 4b) of a leg (5) of a table or desk (6), **characterized in that** said terminal ends (2a, 2b) of said crossmembers (3a, 3b) has a maximum width (b) that has the same dimensions as the resting side (a) of said leg (5), said device (1) having a triangular joint (7) with a base (8) proximate to the ends (9a, 9b) of which protrude, from each side and at right angles to said base (8), two protrusions (11a, 11b) which can be positioned inside first seats (12a, 12b) provided on said crossmembers (3a, 3b), said joint (7) having a vertex composed of a block (14) which is solid and perpendicular to said base (8), is axially perforated and with the terminal end shaped complementarily to the corner (21) of said leg (5), said block (14) defining a pair of side walls (15a, 15b) which pass within adapted second seats (16a, 16b) which are provided at said terminal ends (2a, 2b) of said crossmembers (3a, 3b), a locking screw (17) being associable axially with said base (8) and said block (14) and being provided with a first head (18) for resting on said base (8) and a first stem (19) which can be screwed into an adapted third, threaded seat (20) provided on a corner of said leg (5).

2. The device (1) according to claim 1, **characterized in that** said leg (5) has, at an upper end (22), a fourth, axial seat (23) for a complementarily contoured T-shaped insert (24) which is provided, at one corner (21), with a threaded receptacle (27) which interacts with said first stem (19) of said screw (17).

3. The device according to one or more of the preceding claims, **characterized in that** said joint (7) interacts with said crossmembers (3a, 3b) and, only by way of said first stem (19), with said leg (5).

4. The device according to one or more of the preceding claims, **characterized in that** said terminal ends (2a, 2b) of said crossmembers (3a, 3b) has a maximum width (b) that has substantially the same dimensions as the resting side (a) of said leg (5).

5. The device according to one or more of the preceding claims, **characterized in that** said pair of side walls (15a, 15b) are identical and parallel to each other and can be accommodated within said second seats (16a, 16b) and are mutually spaced apart so as to arrange themselves, when installed, adjacent to said first lateral surfaces (4a, 4b) of said leg (5), said pair of side walls (15a, 15b) having a length that is such as not to interact, when installed, with said leg (5).

6. The device according to one or more of the preceding claims, **characterized in that** said first seats (12a, 12b) and said pair of protrusions (11a, 11b) as well as said third seat (20) are provided so that, once installed, said joint (7) is arranged with the ends of said pair of side walls (15a, 15b) arranged adjacent to the corner (21) of said leg (5) and said protrusions (11a, 11b) are arranged inside and in abutment against said first seats (12a, 12b) provided on said second lateral surfaces (13a, 13b) of said crossmembers (3a, 3b).

7. The device according to one or more of the preceding claims, **characterized in that** said third, threaded seat (20) provided on said corner (21) of said leg (5) is constituted, alternatively, by a simple hole (28).

8. The device according to one or more of the preceding claims, **characterized in that** a table top (29) can be associated with said table or desk (6) and can be arranged on top of said crossmembers (3a, 3b), which have spacers (30) which can be accommodated partially inside adapted fourth seats or holes provided below said table top (29).

9. The device according to one or more of the preceding claims, **characterized in that** a table top (29) of the box-like type, in which it has edges (31) folded onto said crossmembers (3a, 3b), can be associated with said table or desk (6), recesses (32) being provided at the corners which are substantially triangular in shape and are shaped complementarily to adapted inserts (33) which are provided at the upper end (22) of each one of said legs (5), said legs having an axial reinforcement (34).

10. The device according to one or more of the preceding claims, **characterized in that**, at the terminal ends (2a, 2b) of said crossmembers (3a, 3b) which interact with said leg (5), there is a raised portion (36a, 36b) that protrudes axially from, and is offset from, the lower surface (37a, 37b) of said crossmembers, there being, proximate to said upper end (22) of said leg (5), and in an area below said hole (28), fifth seats (38a, 38b) which are shaped complementarily to said raised portions (36a, 36b), the position of said fifth seats (38a, 38b) being such that coupling said crossmembers (3a, 3b) to said leg (5) also results in the insertion into said fifth seats of said raised portions (36a, 36b), there being, proximate to the lower end of said second stem (26) of said insert (24), sixth seats (39a, 39b) which are shaped complementarily to said fifth seats (38a, 38b) for the insertion of said raised portions (36a, 36b).
